# EUROPÄISCHE PATENTANMELDUNG

(11) **EP 1 350 745 A2**
(43) Veröffentlichungstag der Anmeldung: **08.10.2003**
(21) Anmeldenummer: 03006452.1
(22) Anmeldetag: 21.03.2003
(51) Int. Cl.: B65G 60/00

(54) **Fördersystem zum Entstapeln, Positionieren und Stapeln von Werkstückträgern, insbesondere von mit Werkstücken beladenen Werkstückträgern zur Versorgung von Werkzeugmaschinen mit den Werkstücken**

(30) Priorität: 26.03.2002 DE 10213721
(71) Anmelder: Modular Automation GmbH, 63868 Grosswallstadt (DE)
(72) Erfinder: Nüssle, Gerhard, 64807 Dieburg (DE)
(74) Vertreter: Moser, Jörg Michael, Dipl.-Ing.

(57) **Zusammenfassung**

Die Erfindung betrifft ein Fördersystem (1) zum Entstapeln, Positionieren und Stapeln von Werkstückträgern (2), insbesondere von mit Werkstücken beladenen Werkstückträgern (2) zur Versorgung von Werkzeugmaschinen mit den Werkstücken, mit einem Entstapelplatz (4) zur Bereitstellung eines Aufgabestapels (8) von mindestens zwei Werkstückträgern (2), einer dem Entstapelplatz (4) zugeordneten Entstapelvorrichtung (3a) zur Entnahme des jeweils obersten Werkstückträgers (2) von dem Stapel, einem der Entstapelvorrichtung (3a) zugeordneten Transferförderer (3b) zur Übernahme des Werkstückträgers (2) von der Entstapelvorrichtung (3a) und zur Förderung an einen dem Transferförderer (3b) zugeordneten Übergabeplatz, von dem die Werkzeugmaschine mit den Werkstücken bestückbar ist, einer dem Transferförderer (3b) zugeordneten Stapelvorrichtung (3c) zur Übernahme des Werkstückträgers (2) von dem Transferförderer (3b) und Förderung des Werkstückträgers (2) zu einen der Stapelvorrichtung (3c) zugeordneten Stapelplatz (6) zur Aufnahme des Werkstückträgers (2) in einem auf dem Stapelplatz (6) gebildeten Entnahmestapel.

Um dieses Fördersystem konstruktiv zu vereinfachen, wird vorgeschlagen, dass die Entstapelvorrichtung (3a), der Transferförderer (3b) und die Stapelvorrichtung (3c) als Umlaufförderer (3) mit einem gemeinsamen Zugmittel (13) ausgebildet sind.

## Beschreibung

Die Erfindung betrifft ein Fördersystem zum Entstapeln, Positionieren und Stapeln von Werkstückträgern, insbesondere von mit Werkstücken beladenen Werkstückträgern zur Versorgung von Werkzeugmaschinen mit den Werkstücken, gemäß dem Oberbegriff des Anspruchs 1.

Fördersysteme zur Beschickung von Werkzeugmaschinen mit Werkstücken und zum Weitertransport der bearbeiteten Werkstücke sind allgemein bekannt. Derartige Fördersysteme weisen beispielsweise einen Entstapelplatz auf, auf dem die Werkstücke für die Werkzeugmaschine bereitgestellt werden. In üblicher Weise sind mehrere Werkstücke auf einem Werkstückträger angeordnet und mehrere Werkstückträger sind in Form eines Stapels aufeinander auf dem Entstapelplatz abgestellt. Zur Beschickung der Werkzeugmaschine wird jeweils der oberste Werkstückträger mittels einer Entstapelvorrichtung von den übrigen Werkstückträgern in Vertikalrichtung abgehoben und von der Entstapelvorrichtung an einen Transferförderer abgegeben. Über den Transferförderer wird der Werkstückträger im wesentlichen in Horizontalrichtung zu einem Übergabeplatz transportiert, von dem über eine weitere Handhabungsvorrichtung das Werkstück von dem Werkstückträger entnommen wird und der Werkzeugmaschine zugeführt wird. Nach erfolgter Bearbeitung des Werkstückes wird das Werkstück von der Handhabungsvorrichtung aus der Werkzeugmaschine entnommen und zurück in den Werkstückträger transportiert. Für den Fall, dass mehrere Werkstücke bzw. Werkstückreihen in dem Werkstückträger in Förderrichtung des Transferförderers gesehen hintereinander angeordnet sind, wird der Werkstückträger soweit weitergefördert, bis das nächste Werkstück sich an dem Übergabeplatz befindet. Wenn alle Werkstücke eines Werkstückträgers bearbeitet sind, wird der Werkstückträger von dem Transferförderer weitergefördert und von einer Stapelvorrichtung übernommen, über die der Werkstückträger vertikal nach unten auf einen Stapelplatz gefördert und dort bzw. auf den obersten der dort bereits abgestellten Werkstückträger abgestellt wird. Im Bereich des Entstapelplatzes oder des Stapelplatzes sind die gestapelten Werkstückträger in üblicher Weise auf einer Euro-Palette abgestellt, auf denen die Stapel von Werkstückträger jeweils transportiert werden.

Das aus dem Stand der Technik bekannte Fördersystem zur Beschickung von Werkzeugmaschinen mit Werkstücken und zum Weitertransport der bearbeiten Werkstücke setzt sich in nachteiliger Weise aus einzelnen Fördervorrichtungen wie Entstapelvorrichtungen, Transferförderern und Stapelvorrichtungen zusammen, die jeweils eigene Antriebe aufweisen. Das Fördersystem ist somit konstruktiv sehr aufwendig und großbauend.

Hiervon ausgehend liegt der vorliegenden Erfindung die Aufgabe zugrunde, ein konstruktiv besonders einfaches Fördersystem zum Entstapeln, Positionieren und Stapeln von Werkstückträgern, insbesondere von mit Werkstücken beladenen Werkstückträgern zur Versorgung von Werkzeugmaschinen mit den Werkstücken, zu schaffen.

Diese Aufgabe wird durch ein Fördersystem zum Entstapeln, Positionieren und Stapeln von Werkstückträgern mit den Merkmalen des Anspruches 1 gelöst. Vorteilhafte Ausgestaltungen der Erfindung sind in den Ansprüchen 2 bis 16 angegeben.

Erfindungsgemäß wird bei einem Fördersystem zum Entstapeln, Positionieren und Stapeln von Werkstückträgern mit einem Entstapelplatz zur Bereitstellung eines Aufgabestapels mit mindestens einem Werkstückträger, einer dem Entstapelplatz zugeordneten Entstapelvorrichtung zur Entnahme des jeweils obersten Werkstückträgers von dem Stapel, einem der Entstapelvorrichtung zugeordneten Transferförderer zur Übernahme des Werkstückträgers von der Entstapelvorrichtung und zur Förderung an einen dem Transferförderer zugeordneten Übergabeplatz, von dem die Werkzeugmaschine mit den Werkstücken bestückbar ist, einer dem Transferförderer zugeordneten Stapelvorrichtung zur Übernahme des Werkstückträgers von dem Transferförderer und Förderung des Werkstückträgers zu einen der Stapelvorrichtung zugeordneten Stapelplatz zur Aufnahme des Werkstückträgers in einem auf dem Stapelplatz gebildeten Entnahmestapel, eine konstruktiv besonders einfache Bauweise, dadurch erreicht, dass die Entstapelvorrichtung, der Transferförderer und die Stapelvorrichtung als Umlaufförderer mit einem gemeinsamen Zugmittel ausgebildet sind. Hierdurch kann vorteilhafter Weise auf eigene Antriebe für die sonst verwendeten einzelnen Förderelemente verzichtet werden. Mit dem Umlaufförderer werden ausreichend schnelle Wechselzeiten für die Werkzeugträger erreicht, da Übergaben zwischen einzelnen Förderern entfallen.

Durch eine einfache Umlenkung des Zugmittels, das endlos umläuft und im Bereich der Entstapelvorrichtung und der Stapelvorrichtung im Wesentlichen vertikal und im Bereich des Transferförderers im Wesentlichen horizontal verläuft, können die Bewegungsfunktionen der einzelnen sonst erforderlichen Förderelemente nachgebildet werden.

In Bezug auf die zu handhabenden Werkstückträger kann vorteilhaft sein, dass der Umlaufförderer im wesentlichen aus zwei endlos umlaufenden Zugmitteln besteht, die jeweils in einer im wesentlichen vertikalen Ebene umlaufen. Zwischen den Ebenen sind der Entstapelplatz und der Stapelplatz angeordnet und die Ebenen grenzen jeweils seitlich an den Entstapelplatz und den Stapelplatz an.

Eine synchrone Bewegung der Zugmittel und konstruktiv besonders einfache Bauweise kann dadurch erreicht werden, dass beide Zugmittel ein gemeinsamen Antrieb haben. Vorzugsweise ist dieser Antrieb als Elektromotor mit einer Positioniersteuerung ausgebildet.

Für eine besonders einfache Handhabung der Werkstückträger können an der dem Entstapelplatz und dem Stapelplatz zugewandten Seite des Zugmittels jeweils ein Greifelement zum Ergreifen mindestens eines Werkstückträgers angeordnet sein und dieses Greifelement wird zur Förderung des Werkstückträgers von dem Zugmittel mitgenommen. Hierbei kann an jeder der beiden gegenüberliegend angeordneten Zugmittel ein Greifelement angeordnet sein, die über je einen Greifantrieb auf einander zu bewegbare Greifer zum Ergreifen des Werkstückträgers aufweisen. Vorteilhafter Weise kann der Greifantrieb elektrisch oder pneumatisch sein.

Konstruktiv besonders einfach kann das Fördersystem ausgestaltet werden, wenn das Zugmittel zur Verwirklichung der Förderbewegungen der Werkstückträger über Umlenkräder derart geführt wird, dass von der Seite gesehen der Verlauf des Zugmittels im wesentlichen m-förmig ist. Hierfür kann vorgesehen werden, dass zur Umlenkung jedes der Zugmittel vier obere Umlenkräder und drei untere Umlenkrollen derart an einem Rahmen angeordnet sind, dass die oberen Umlenkräder auf einem gemeinsamen Höhenniveau und die unteren Umlenkräder im wesentlichen auf einem gemeinsamen Höhenniveau angeordnet sind. Zwischen den Umlenkrädern werden jeweils zwei Abschnitte des umlaufenden Zugmittels gebildet, die im Bereich des Entstapelplatzes und im Bereich des Stapelplatzes in Förderrichtung des Transferförderers voneinander beabstandet sind und gleichsinnig in Vertikalrichtung verlaufen. Im Bereich des Transferförderers sind die zwei Abschnitte des umlaufenden Zugmittels in Förderrichtung des Transferförderers voneinander beabstandet und verlaufen gleichsinnig in Horizontalrichtung. Durch diese Führung des Zugmittels kann in vorteilhafter Weise erreicht werden, dass der Werkstückträger bzw. die den Werkstückträger tragenden Greifelemente in allen Positionen des Fördervorganges horizontal bleibt.

Das Greifelement kann in einer besonderen Ausführungsform einen langgestreckten Grundrahmen aufweisen, der im Bereich seiner beiden Enden derart mit verschiedenen Abschnitten des einen Zugmittels verbunden ist, dass das Greifelement im Bereich der Entstapelvorrichtung und der Stapelvorrichtung im Wesentlichen vertikal und im Bereich des Transferförderers im Wesentlichen horizontal von dem Zugmittel bewegt wird, ohne seine horizontale Lage zu verlassen.

Um das Zugmittel zu entlasten und eine genaue Positionierung des Werkstückträgers zu erreichen, kann das Greiferelement über hieran angeordnete Mitnehmer in den Bereichen des Zugmittels zwischen den Umlenkrädern über Führungsschienen geführt werden. Die Führungsschienen sind hierbei an dem Rahmen angeordnet.

In bevorzugter Ausführung kann das Zugmittel als Kette oder als Zahnriemen ausgebildet sein und die Umlenkräder sind entsprechend als Zahnscheiben beziehungsweise Zahnräder ausgebildet. Außerdem kann der Entstapelplatz und der Stapelplatz jeweils von einem Endbereich eines Rollenförderers gebildet werden.

Nachfolgend wird die vorliegende Erfindung an Hand von einem in einer Zeichnung dargestellten Ausführungsbeispiel näher erläutert. Es zeigen:
- Figur 1: eine Seitenansicht auf eines erfindungsgemäßen Fördersystems zur Bereitstellung von Werkzeugträgern mit Werkstücken für eine Beschickung einer Werkzeugmaschine und
- Figur 2: eine Draufsicht auf Figur 1.

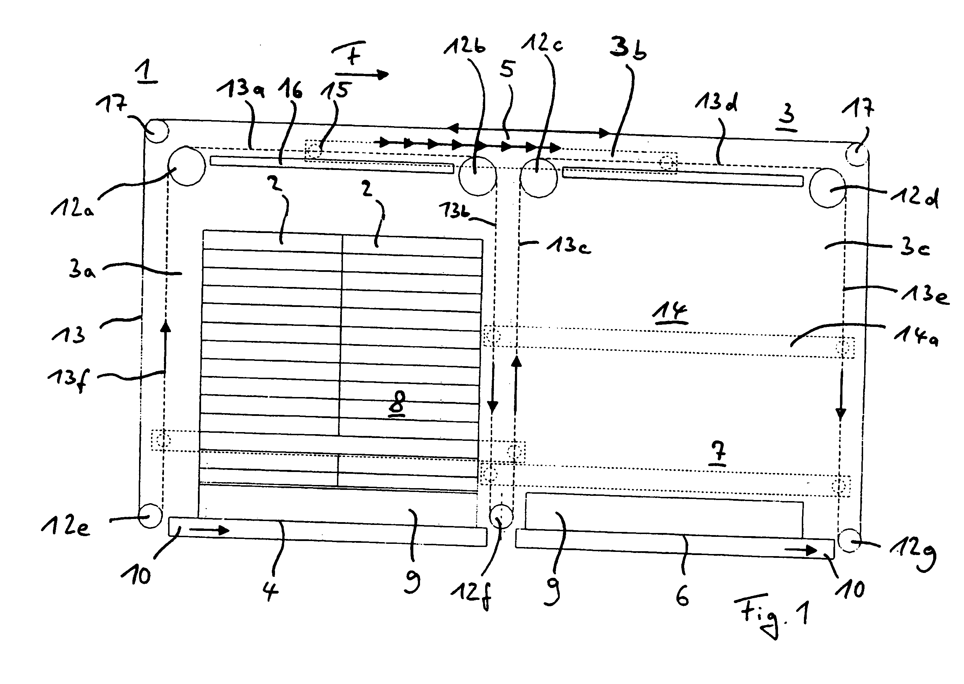

Die Figur 1 zeigt eine Seitenansicht eines erfindungsgemäßen Fördersystems 1 zum Entstapeln, Positionieren und Stapeln von Werkstückträgern 2. Das Fördersystem dient zur Versorgung einer nicht dargestellten Werkzeugmaschine mit Werkstücken. Die Werkstücke sind in üblicher Weise einzeln oder zu mehreren an vorbestimmten Orten, vorzugsweise in entsprechenden Halterungen, auf den Werkstückträgern 2 gelagert. Zur Versorgung der Werkzeugmaschine werden die Werkstückträger 2 von einem Umlaufförderer 3 ausgehend von einem Entstapelplatz 4 zu einem Übergabeplatz 5 und nach erfolgter Bearbeitung in der Werkzeugmaschine einem Stapelplatz 6 zugeführt. Der Umlaufförderer 3 übernimmt hierbei die Funktion einer Entstapelvorrichtung 3a, eines Transferförderer 3b und einer Stapelvorrichtung 3c.

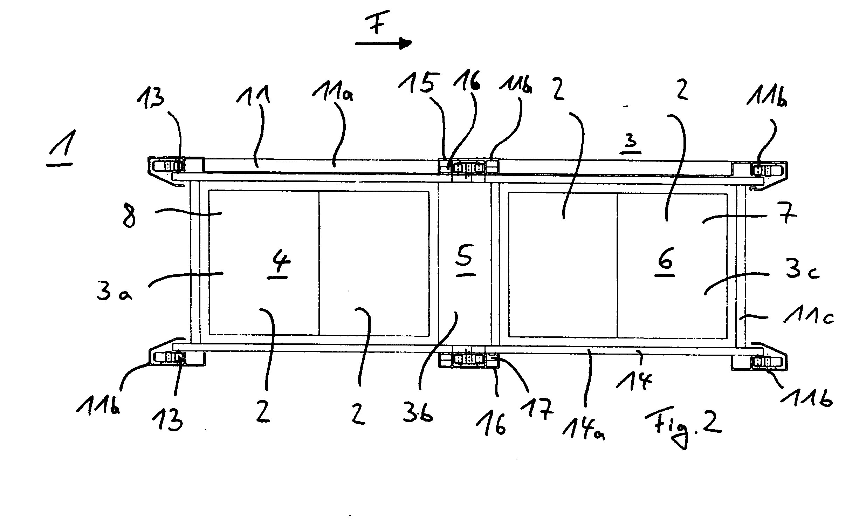

Nachfolgend wird unter Verwendung der Figuren 1 und die Figur 2, die eine Draufsicht auf Figur 1 zeigt, die Funktionsweise des erfindungsgemäßen Fördersystems 1 und dessen konstruktive Ausgestaltung, insbesondere des Umlaufförderers 3, näher erläutert. Die zur Bearbeitung anstehenden Werkstücke werden in Werkstückträgern 2 dem Entstapelplatz 4 des Fördersystems 1 zugeführt. Hierbei sind mehrere Werkstückträger 2 in Form eines Aufgabestapels 8 auf einer Palette 9, vorzugsweise einer Euro-Palette, gelagert. Da im vorliegenden Fall die rechteckigen Werkstückträger 2 Abmessungen von etwa 600mm x 800mm haben, können zwei Werkstückträger 2 nebeneinander in einer Lage auf der Palette 9 abgestellt werden. Der Entstapelplatz 4 ist als Endabschnitt einer Rollenbahn 10 ausgebildet, so dass die Palette 9 mit den Werkstückträgern 2 vor dem Fördersystem 1 und somit unbehindert von dem Fördersystem 1 auf der Rollenbahn 10 abgestellt werden kann. Nachdem die Palette 9 dort, beispielsweise von einem Gabelstapler abgestellt worden ist, wird die von der Rollenbahn 10 in die Position des Entstapelplatzes 4 gefördert. Eine genaue Positionierung der Palette 9 im Bereich des Entstapelplatzes 4 kann über nicht dargestellte Endanschläge erfolgen.

Da sich nun die Palette 9 und somit die darauf befindlichen Werkstückträger 2 in einer vorbestimmten Position am Entstapelplatz 4 befinden, kann die oberste Lage der Werkstückträger 2 von einer Entstapelvorrichtung 3a abgehoben werden und dem Transferförderer 3b zugeführt werden. Wie zuvor bereits ausgeführt, sind die Entstapelvorrichtung 3a und der Transferförderer 3b Bestandteile eines Umlaufförderers 3. Der Umlaufförderer 3 besteht im Wesentlichen aus zwei m-förmigen aufrecht stehenden Rahmen 11, die voneinander beabstandet und seitlich an den Entstapelplatz 5 und Stapelplatz 6 angrenzen. Der in Figur 1 aus Gründen der Übersichtlichkeit nicht dargestellte Rahmen 11 ist als biegesteifes Stahlblechgestell mit allen erforderlichen Befestigungsmöglichkeiten für Anbauteile wie Hubelemente, Schalter, Lichtschranken, Führungsschienen und Verkleidungen. Jeder Rahmen 11 weist somit eine in Förderrichtung F des Transferförderers 1b verlaufende Längstraverse 11a auf, die jeweils von drei jeweils voneinander beabstandeten Trägern 11b getragen wird. Jeder Rahmen 11 ist über vier Quertraversen 11c mit dem gegenüberliegenden Rahmen 11 verbunden. Der Rahmen 11 ist somit mit einem sechsbeinigen Gestell vergleichbar. Der Entstapelplatz 5 und der Stapelplatz 6 sind hierbei in Förderrichtung F des Transferförderers 3b gesehen hintereinander und mit geringem Abstand zueinander angeordnet.

An den einander zugewandten Seiten der Rahmen 11 sind mehrere Umlenkräder 12 um horizontal und quer zur Förderrichtung F des Transferförderers 3b ausgerichtete Achsen drehbar gelagert. Es sind je Rahmen 11 vier obere Umlenkräder 12a, 12b, 12c und 12d und drei untere Umlenkräder 12e, 12f und 12g vorgesehen. Die vier oberen Umlenkräder 12a, 12b, 12c und 12d sind im Bereich der Quertraverse 11a des Rahmens 11 und somit auf einem gemeinsamen Höhenniveau gelagert. Das erste Umlenkrad 12a ist oberhalb des in Förderrichtung F des Transferförderers 3b gesehen ersten Trägers 11b angeordnet, das zweite und dritte Umlenkrad 12b und 12c oberhalb des zweiten Trägers 11b und das vierte Umlenkrad 12d oberhalb des dritten Trägers 11b. Hierbei sind in Förderrichtung F des Transferförderers 3b gesehen der erste Träger 11b im Bereich des Anfangs des Entstapelplatzes 4, der zweite Träger 11b zwischen dem Ende des Entstapelplatzes 4 und dem Anfang des Stapelplatzes 6 und der dritte Träger 11b im Bereich des Endes des Entstapelplatzes 4 angeordnet. Die beiden Sätze von Umlenkrädern 12a bis 12g sind Bestandteil des Umlaufförderers 3 und dienen zur Führung eines endlos umlaufenden Zugmittels 13, das vorzugsweise als Zahnriemen ausgebildet ist. Das Zugmittel 13 kann auch als Kette ausgebildet sein.

Die beiden Zugmittel 13 sind jeweils so um die Umlenkräder 12a bis 12g geführt, dass an dem Zugmittel 13 angeordnete Greifelemente 14 zur Aufnahme der Werkstückträger 2 so bewegt werden können, dass die Funktionen der Entstapelvorrichtung 3a, des Transferförderer 3b und der Stapelvorrichtung 3c von dem Umlaufförderer 3 mit Hilfe der Zugmitteln 13 ausgeführt werden.

Hierfür ist ausgehend von dem ersten oberen Umlenkrad 12a das Zugmittel 13 horizontal sowie in Förderrichtung F des Transferförderers 3b zu dem zweiten Umlenkrad 12b geführt und bildet somit einen ersten Abschnitt 13a für die Förderung der Werkstückträger 2 im Bereich des von dem Umlaufförderer 3 gebildeten Transferförderers 3b. Anschließend wird das Zugmittel 13 von dem zweiten oberen Umlenkrad 12b um etwa 90° umgelenkt und verläuft vertikal nach unten in Richtung des dritten unteren Umlenkrades 12f. Der Abschnitt 13b zwischen dem zweiten oberen Umlenkrad 12b und dem dritten unteren Umlenkrad 12f bildet einen Teil der Stapelvorrichtung 3c des Umlaufförderers 3. An dem dritten unteren Umlenkrad 12f wird das Zugmittel 13 um etwa 180° umgelenkt und verläuft vertikal nach oben in Richtung des vierten oberen Umlenkrades 12c. Dieser Abschnitt 13c zwischen dem dritten unteren Umlenkrad 12f und dem vierten oberen Umlenkrad 12c bildet einen Teil der Entstapelvorrichtung 3a des Umlaufförderers 3. Nach einer weiteren 90°-Umlenkung verläuft das Zugmittel 13 horizontal sowie in Förderrichtung F des Transferförderers 3b zu dem fünften oberen Umlenkrad 12d und bildet somit einen zweiten Abschnitt 13d für die Förderung der Werkstückträger 2 im Bereich des von dem Umlaufförderer 3 gebildeten Transferförderers 3b. Nun wird das Zugmittel 13 von dem oberen fünften Umlenkrad 12d um etwa 90° umgelenkt und verläuft vertikal nach unten in Richtung des unteren sechsten Umlenkrades 12g. Der Abschnitt 13e zwischen dem oberen fünften Umlenkrad 12b und dem dritten unteren Umlenkrad 12g bildet einen Teil der Stapelvorrichtung 3c des Umlaufförderers 3.

Um das Zugmittel 13 nun zurück an den Anfang des Fördersystems 1 zu führen, sind zwei Zusatzrollen 17 im Bereich des oberen ersten Umlenkrades 12a und des oberen fünften Umlenkrades 12d leicht nach außen versetzt angeordnet. Durch eine 180°-Umlenkung wird das Zugmittel nun vertikal nach oben zu der zweiten Zusatzrolle 17, durch eine 90°-Umlenkung horizontal entgegen der Förderrichtung F zu der ersten Zusatzrollen 17 und durch eine weitere 90°-Umlenkung vertikal nach unten zu der siebten Umlenkrolle 12e geführt. Mit einer letzten 180°-Umlenkung wird das Zugmittel 13 vertikal nach oben in Richtung des ersten oberen Umlenkrades 12a geführt. Der hiervon gebildete Abschnitt 13f zwischen dem unteren siebten Umlenkrad 12e und dem oberen ersten Umlenkrad 12a ist ein weiterer Teil der Entstapelvorrichtung 3a des Umlaufförderers 3.

Auch könnte nach einer weiteren 90°-Umlenkung durch das dritte untere Umlenkrad 12g das Zugmittel 13 entgegen der Förderrichtung F des Transferförderers 3b horizontal sowie direkt zurück zu dem siebten unteren Umlenkrad 12e geführt. Daher sind das sechste untere Umlenkrad 12g und das siebte untere Umlenkrad 12e auf einem leicht niedrigeren Höhenniveau als das dritte untere Umlenkrad 12f angeordnet.

Im Bereich der Entstapelvorrichtung 3a des Umlaufförderers 3 sind an den aneinander zugewandten Seiten des Zugmittels 13 die Greifelemente 14 angeordnet, die im wesentlichen aus ein langen sich in Förderrichtung F des Transferförderers 3b erstreckenden Grundrahmen 14a bestehen. Der Grundrahmen 14a ist an seinem vorderen Ende mit dem Abschnitt 13f des Zugmittel 13 verbunden und an seinem hinteren Ende mit dem Abschnitt 13c des Zugmittel 13. Ein Antrieb der beiden Zugmittel 13 in der zuvor beschriebenen als Vorwärtsrichtung definierten Umlaufrichtung führt nun dazu, dass das Greifelement 14 sich im Bereich der Entstapelvorrichtung 3a nach oben bewegt. Vor Einleitung dieser Bewegung sind die an den beiden gegenüberliegenden Greifelementen 14 angeordneten und nicht dargestellten Greifer auf einander zu gefahren worden, um die oberste Lage der beiden Werkstückträger 2 zu ergreifen. Hierzu weisen die Greifelemente 14 einen nicht dargestellten Greifantrieb auf, der über eine Kabelschleppleitung mit Energie versorgt wird. Der Greifantrieb kann elektrisch oder pneumatisch betreiben werden. Je nach Ausgestaltung der Werkzeugträger 2 können die Greifer als Positionierstifte ausgebildet sein, die in entsprechende Öffnungen in den Seitenwänden der Werkzeugträger 2 einfahren, oder Gabel sein, die die Werkzeugträger 2 unterfahren. Eine Kombination ist auch möglich.

In einem ersten Schritt erfolgt eine vertikale Positionierung der beiden Greifelemente 14 über eine Umlaufbewegung der Zugmittel 13 auf die Höhe der obersten Lage der beiden Werkstückträger des Aufgabestapels 8. Hierfür werden die beiden Zugmittel 13 über einen nicht dargestellten Antrieb, der vorzugsweise als Elektroantrieb mit einer Positioniersteuerung ausgebildet ist, synchron angetrieben. Anschließend fahren die Greifelemente 14 zu und die Werkstückträger 2 werden über die Umlaufbewegung der Zugmittel 13 auf die Höhe des von den horizontalen Abschnitten 13a und 13d gebildeten Transferförderers 3b angehoben. Die Entstapelbewegung ist somit beendet.

Durch die weitere Umlaufbewegung der Zugmittels 13 werden die beiden Werkstückträger 2 horizontal in Förderrichtung F des Transferförderers 3b bis zu dem Übergabeplatz 5 gefördert, der etwa in der Mitte der Förderstrecke des Transferförderers 3b liegt. Wenn der Werkstückträger 2 diese Position erreicht hat, wird von einer nicht dargestellten Handhabungsvorrichtung die Werkzeugmaschine beschickt und/oder das fertig bearbeitete Werkstück zurück in den Werkstückträger 2 gefördert. Wenn mehrere Werkstücke in einem Werkstückträger 2 sind, kann der Transferförderer 3b in Zusammenarbeit mit der Positioniersteuerung des Zugmittelantriebes auch als Taktförderer dienen. Sind alle Werkstücke eines Werkstückträgers 2 bearbeitet, wird der Werkstückträger 2 von dem Zugmittel 13 weiter in Förderrichtung F gefördert, bis dieser oberhalb des Stapelplatzes 6 ankommt.

Die Weiterbewegung des Zugmittels 13 und dessen folgende 90°-Umlenkung führt zu einer Absenkung des Werkstückträgers 2 auf den Entnahmestapel 7 auf dem Stapelplatz 6. Wenn der Werkstückträger 2 auf dem Entnahmestapel 7 abgestellt ist, fahren die Greifelemente 14 auseinander und geben den Werkstückträger 2 frei. Nun fahren die beiden Greifelemente 14 durch eine entsprechende Rückwärtsbewegung des Zugmittels 13 zurück zu dem Entstapelplatz 4, um einen weiteren Werkstückträger 2 aufzunehmen. Der Stapelplatz 6 ist wie der Entstapelplatz 4 als Endabschnitt einer Rollenbahn 10 ausgebildet, so dass die Palette 9 mit den Werkstückträgern 2 hinter dem Fördersystem 1 und somit unbehindert von dem Fördersystem 1 von der Rollenbahn 10 aufgenommen werden kann. Eine genaue Positionierung der Palette 9 im Bereich des Stapelplatzes 6 kann über nicht dargestellte Endanschläge erfolgen.

Es ist selbstverständlich, dass im Bereich des Entstapelplatzes 4, des Übergabeplatzes 5 und des Stapelplatzes 6 entsprechende mit der Positioniersteuerung des Zugmittels 13 und der Greiferelementsteuerung zusammenwirkende Sensoren angeordnet sind. Entsprechende Sensoren geben auch Auskunft über die Stellung des Greifelementes 14.

Des Weiteren ist der Figur 1 zu entnehmen, dass zumindest im Bereich der horizontalen Abschnitte 13a und 13d des Zugmittels 13 der Grundrahmen 14a über an seinem Anfang und Ende angeordnete Führungsrollen 15 in Führungsschienen 16 geführt sind. Entsprechende Führungsschienen 16 sind auch im Bereich der vertikalen Abschnitte 13b und 13c des Zugmittels und somit parallel zu den zweiten Trägern 11b verlaufend vorgesehen. An den Führungsschienen 16 können Einführungsschrägen vorgesehen werden.

### Bezugszeichenliste

- 1: Fördersystem
- 2: Werkstückträger
- 3: Umlaufförderer
- 3a: Entstapelvorrichtung
- 3b: Transferförderer
- 3c: Stapelvorrichtung
- 4: Entstapelplatz
- 5: Übergabeplatz
- 6: Stapelplatz
- 7: Entnahmestapel
- 8: Aufgabestapel
- 9: Palette
- 10: Rollenbahn
- 11: Rahmen
- 11a: Längstraverse
- 11b: Träger
- 11c: Quertraverse
- 12a-12g: Umlenkrad
- 13: Zugmittel
- 13a-13f: Abschnitte von 13
- 14: Greifelement
- 14a: Grundrahmen
- 15: Führungsrollen
- 16: Führungsschienen
- 17: Zusatzrolle

- F: Förderrichtung

## Patentansprüche

1. Fördersystem zum Entstapeln, Positionieren und Stapeln von Werkstückträgern, insbesondere von mit Werkstücken beladenen Werkstückträgern zur Versorgung von Werkzeugmaschinen mit den Werkstücken, mit einem Entstapelplatz zur Bereitstellung eines Aufgabestapels mit mindestens einem Werkstückträger, einer dem Entstapelplatz zugeordneten Entstapelvorrichtung zur Entnahme des jeweils obersten Werkstückträgers von dem Stapel, einem der Entstapelvorrichtung zugeordneten Transferförderer zur Übernahme des Werkstückträgers von der Entstapelvorrichtung und zur Förderung an einen dem Transferförderer zugeordneten Übergabeplatz, von dem die Werkzeugmaschine mit den Werkstücken bestückbar ist, einer dem Transferförderer zugeordneten Stapelvorrichtung zur Übernahme des Werkstückträgers von dem Transferförderer und Förderung des Werkstückträgers zu einen der Stapelvorrichtung zugeordneten Stapelplatz zur Aufnahme des Werkstückträgers in einem auf dem Stapelplatz gebildeten Entnahmestapel,
**dadurch gekennzeichnet,**
**dass** die Entstapelvorrichtung (3a), der Transferförderer (3b) und die Stapelvorrichtung (3c) als Umlaufförderer (3) mit einem gemeinsamen Zugmittel (13) ausgebildet sind.

2. Fördersystem nach Anspruch 1, **dadurch gekennzeichnet, dass** das Zugmittel (13) endlos umläuft und im Bereich der Entstapelvorrichtung (3a) und der Stapelvorrichtung (3c) im Wesentlichen vertikal und im Bereich des Transferförderers (3b) im Wesentlichen horizontal verläuft.

3. Fördersystem nach Anspruch 1 oder 2, **dadurch gekennzeichnet, dass** der Umlaufförderer (3) im wesentlichen aus zwei endlos umlaufenden Zugmitteln (13) besteht, die jeweils in einer im wesentlichen vertikalen Ebene umlaufen, zwischen denen der Entstapelplatz (4) und der Stapelplatz (6) angeordnet sind und die jeweils seitlich an den Entstapelplatz (4) und den Stapelplatz 6() angrenzen.

4. Fördersystem nach Anspruch 3, **dadurch gekennzeichnet, dass** beiden Zugmitteln (13) ein gemeinsamen Antrieb zur synchronen Bewegung der Zugmittel (13) zugeordnet ist.

5. Fördersystem nach Anspruch 4, **dadurch gekennzeichnet, dass** der Antrieb als Elektromotor mit einer Positioniersteuerung ausgebildet ist.

6. Fördersystem nach einem der Ansprüche 1 bis 5, **dadurch gekennzeichnet, dass** an der dem Entstapelplatz (4) und dem Stapelplatz (6) zugewandten Seite des Zugmittels (13) ein Greifelement (14) zum Ergreifen mindestens eines Werkstückträgers (2) angeordnet ist und das Greifelement (14) zur Förderung des Werkstückträgers (2) von dem Zugmittel (13) mitgenommen wird.

7. Fördersystem nach Anspruch 6, **dadurch gekennzeichnet, dass** an jeder der beiden gegenüberliegend angeordneten Zugmittel (13) ein Greifelement (14) angeordnet ist, die über je einen Greifantrieb auf einander zu bewegbare Greifer zum Ergreifen des Werkstückträgers (2) aufweisen.

8. Fördersystem nach Anspruch 7, **dadurch gekennzeichnet, dass** der Greifantrieb elektrisch oder pneumatisch ist.

9. Fördersystem nach einem der Ansprüche 1 bis 8, **dadurch gekennzeichnet**, das Zugmittel (13) zur Verwirklichung der Förderbewegungen der Werkstückträger (2) über Umlenkräder (12a -12g) derart geführt ist, dass von der Seite gesehen der Verlauf des Zugmittels (13) im wesentlichen m-förmig ist.

10. Fördersystem nach Anspruch 9, **dadurch gekennzeichnet, dass** zur Umlenkung jedes der Zugmittel (13) vier obere Umlenkräder (12a - 12d) und drei untere Umlenkrollen (12e - 12g) derart an einem Rahmen (11) angeordnet sind, dass die oberen Umlenkräder (12a - 12d) auf einem gemeinsamen Höhenniveau und die unteren Umlenkräder (12e - 12g) im wesentlichen auf einem gemeinsamen Höhenniveau angeordnet sind und zwischen den Umlenkrädern (12a - 12g) jeweils zwei Abschnitte (13a- 13f) des umlaufenden Zugmittels (13) gebildet werden, die im Bereich des Entstapelplatzes (4) und im Bereich des Stapelplatzes (6) in Förderrichtung (F) des Transferförderers (3b) voneinander beabstandet und gleichsinnig in Vertikalrichtung verlaufen und die im Bereich des Transferförderers (3b) in Förderrichtung (F) des Transferförderers (3b) voneinander beabstandet sind und gleichsinnig in Horizontalrichtung verlaufen.

11. Fördersystem nach Anspruch 10, **dadurch gekennzeichnet, dass** das Greifelement (14) einen langgestreckten Grundrahmen (14a) aufweist, der im Bereich seiner beiden Enden derart mit verschiedenen Abschnitten (13a - 13f) des einen Zugmittels (13) verbunden ist, dass das Greifelement (14) im Bereich der Entstapelvorrichtung (3a) und der Stapelvorrichtung (3c) im Wesentlichen vertikal und im Bereich des Transferförderers (3b) im Wesentlichen horizontal von dem Zugmittel (13) bewegt wird.

12. Fördersystem nach Anspruch 10 oder 11, **dadurch gekennzeichnet, dass** Greiferelement (14) über hieran angeordnete Führungsrollen (16) in den Bereichen des Zugmittels (13) zwischen den Umlenkrädern (12a - 12g) über Führungsschienen (16) geführt ist, die an dem Rahmen (11) angeordnet sind.

13. Fördersystem nach einem der Ansprüche 10 bis 12, **dadurch gekennzeichnet, dass** die Umlenkräder (12a- 12g) an horizontalen und quer zur Förderrichtung (F) des Transferförderers (3b) ausgerichteten Achsen gelagert sind.

14. Fördersystem nach einem der Ansprüche 1 bis 13, **dadurch gekennzeichnet, dass** das Zugmittel (13) als Kette oder als Zahnriemen ausgebildet ist und die Umlenkräder (12a - 12g) entsprechend als Zahnscheiben beziehungsweise Zahnräder ausgebildet sind.

15. Fördersystem nach einem der Ansprüche 1 bis 14, **dadurch gekennzeichnet, dass** der Entstapelplatz (4) und der Stapelplatz (6) auf einer gemeinsamen horizontalen Ebene liegen sowie der Übergabeplatz (5) oberhalb des Entstapelplatzes (4) und des Stapelplatzes (6) angeordnet ist.

16. Fördersystem nach einem der Ansprüche 1 bis 15, **dadurch gekennzeichnet, dass** der Entstapelplatz (4) und der Stapelplatz (6) jeweils von einem Endbereich einer Rollenbahn (10) gebildet ist.
